# EUROPEAN PATENT APPLICATION

(11) **EP 4 512 965 A1**
(43) Date of publication of application: **26.02.2025**
(21) Application number: 23803812.9
(22) Date of filing: 09.05.2023
(51) Int. Cl.: E02F 9/24, E02F 9/26, G01S 15/931, G06V 40/10, G08B 25/14, G08B 3/10, E02F 9/20, B60Q 1/44

(54) **CONSTRUCTION MACHINE**

(30) Priority: 09.05.2022 KR 20220056381
(71) Applicant: HD Hyundai Infracore Co., Ltd., Incheon 22502 (KR)
(72) Inventor: SEO, Jaehak, Incheon 21562 (KR); PARK, Hyunjoo, Seoul 07931 (KR)
(74) Representative: Isarpatent
(86) International application number: PCT/KR2023/006282
(87) International publication number: WO 2023/219389

(57) **Abstract**

The present disclosure relates to a construction machine comprising a driving body, a swing body rotatably installed on the driving body, and a work device installed in front of the swing body. This construction machine according to an embodiment of the present disclosure comprises: a brake lamp which is installed at both ends at the rear of the swing body and turned on in response to braking of the driving body; an auxiliary information display lamp installed long horizontally above the brake lamp at the rear of the swing body; an object detecting unit which detects objects around the construction machine; a swing motion detecting unit which detects the rotation of the swing body; and a control device which turns on or makes the auxiliary information display lamp blink in a pattern selected from among a plurality of differently set patterns on the basis of information received from the object detecting unit and the swing motion detecting unit, wherein the control device controls the auxiliary information display lamp to preferentially light up according to a brake signal.

## Description

### [TECHNICAL FIELD]

The present disclosure relates to a construction machine, and more particularly, to a construction machine equipped with an auxiliary information display lamp.

### [BACKGROUND ART]

A construction machine broadly refers to all machines used in civil engineering or construction work. In general, a construction machine has an engine and a hydraulic pump that is operated by the power of the engine, and moves or operates various work devices with an operating fluid discharged by the hydraulic pump. In addition, a construction machine is equipped with various attachments depending on the type of work to be performed. For example, an excavator, which is a type of construction machine, uses various attachments such as an excavation bucket, a breaker, a vibrator, and a hammer by selectively installing them on one end of an arm.

In this way, construction machines not only drive to move, but also perform tasks at various work sites.

However, conventionally, when a construction machine is working at a work site, a current working status thereof is indicated by using a beacon. Moreover, this beacon is configured so that the worker can select on/off using a switch. Therefore, since a construction machine that works with the beacon turned on and a construction machine that works with the beacon turned off are mixed within the work site, there is a problem in that it is difficult for other workers working around the construction machine to see the current working status of the construction machine at a glance. In addition, there is a problem that it is difficult to clearly distinguish the type of work that the construction machine is working on and the work preparation status or working status.

In addition, when a construction machine moves on a road, it often happens that a worker operates a work device to align equipment or to lower or raise a boom. In this case, there is also a problem that there is a risk of accidents occurring because vehicles behind or around the construction machine have no way of recognizing the operating status of the construction machine.

### [DETAILED DESCRIPTION OF INVENTION]

### [TECHNICAL PROBLEMS]

An embodiment of the present disclosure provides a construction machine capable of providing a warning by auxiliary display of the current status to the surroundings through a multi-functional auxiliary information display lamp.

### [TECHNICAL SOLUTION]

According to an embodiment of the present disclosure, a construction machine includes a driving body, a swing body rotatably installed on the driving body, and a work device installed in front of the swing body. Moreover, the construction machine includes a brake lamp which is installed at both ends at the rear of the swing body and turned on in response to braking of the driving body, an auxiliary information display lamp installed long horizontally above the brake lamp at the rear of the swing body, an object detecting unit which detects objects around the construction machine, a swing motion detecting unit which detects the rotation of the swing body, and a control device which turns on or makes the auxiliary information display lamp blink in a pattern selected from among a plurality of differently set patterns on the basis of information received from the object detecting unit and the swing motion detecting unit, and the control device controls the auxiliary information display lamp to preferentially display lighting according to a brake signal.

The auxiliary information display lamp may include a plurality of light-emitting diodes (LEDs) that are installed long horizontally and turned on independently.

The construction machine may further include a driver seat disposed on one side of the front of the swing body. Moreover, the auxiliary information display lamp may be disposed so as not to overlap the brake lamp vertically but to overlap the driver seat when viewed from the rear.

In addition, the construction machine may further include an engine room that is disposed on the rear of the swing body, and an engine room cover that protects and opens and closes the engine room. Moreover, the auxiliary information display lamp may be disposed in the engine room cover, and the brake lamp may be disposed in the swing body other than the engine room cover.

Further, the construction machine may further include a manipulation device having a work mode selecting unit for selecting the use of the work device. Moreover, when a work mode is selected through the work mode selection unit, the auxiliary information display lamp may be turned on.

The plurality of patterns may include a pattern in which the auxiliary information display lamp sequentially is turned on or blinked from one end to the other end when the swing body is in a swing operation state, and a pattern in which the entire auxiliary information display lamp is blinked repeatedly when an object is detected around the driving body.

The control device may display the swing operation state on the auxiliary information display lamp with priority over the case in which an object is detected around the driving body.

When the swing body is in the swing operation state, the pattern displayed by the auxiliary information display lamp may be executed for a preset period of time before the swing body swings or after the swing of the swing body ends.

The construction machine may further include a work stand-by state detecting unit for detecting a work stand-by state of the work device. Moreover, the control device additionally may reflect information received from the work stand-by state detecting unit when turning on or blinking the auxiliary information display lamp.

The object detecting unit may include an ultrasonic sensor or a motion recognition sensor, and the object detecting unit may be arranged at the rear of the construction machine to detect an object at the rear.

### [EFFECT OF INVENTION]

According to an embodiment of the present disclosure, the construction machine can effectively warn by auxiliary displaying the current status to the surroundings through a multi-functional auxiliary information display lamp.

### [BRIEF DESCRIPTION OF THE DRAWING]

FIG. 1 is a rear view of a construction machine according to a first embodiment of the present disclosure.
FIG. 2 is a partial perspective view of a swing body of the construction machine of FIG. 1 viewed from the rear.
FIG. 3 is a configuration diagram of a construction machine according to the first embodiment of the present disclosure.
FIG.s 4 to 8 are diagrams each illustrating a plurality of patterns expressed by the auxiliary information display lamp of the construction machine of FIG. 3.
FIG. 9 is a flowchart illustrating a control method of the construction machine according to the first embodiment of the present disclosure.
FIG. 10 is a side view of a construction machine according to a second embodiment of the present disclosure.
FIG. 11 is a flowchart illustrating a control method of the construction machine according to the second embodiment of the present disclosure.

### [BEST MODE FOR CARRYING OUT THE INVENTION]

Hereinafter, with reference to the attached drawings, embodiments of the present disclosure will be described in detail so that those skilled in the art can easily implement the present disclosure. The present disclosure may be implemented in various different forms and is not limited to the embodiments described herein.

In addition, in several embodiments, components having the same configuration are representatively described in the first embodiment using the same symbols, and in the other second embodiments, only configurations different from those in the first embodiment are described.

It is noted that the drawings are schematic and not drawn to scale. The relative dimensions and proportions of parts in the drawings are exaggerated or reduced in size for clarity and convenience in the drawings, and any dimensions are for illustration only and not limiting. Moreover, where the same structure, element or part appears in more than one drawing, the same reference numerals are used to indicate similar features.

The embodiments of the present disclosure specifically illustrate ideal embodiments of the present disclosure. As a result, various modifications of the diagrams are expected. Accordingly, the embodiments are not limited to the specific form of the illustrated area, and also include modifications of the form by manufacturing, for example.

In addition, all technical and scientific terms used in the present specification, unless otherwise defined, have the meaning commonly understood by a person of ordinary skill in the art to which the present disclosure belongs. All terms used in the present specification have been selected for the purpose of more clearly explaining the present disclosure and have not been selected to limit the scope of rights according to the present disclosure.

Additionally, expressions such as "including" "comprising," and "having," as used herein, should be understood as open-ended terms that imply the possibility of including other embodiments, unless otherwise stated in the phrase or sentence in which the expression is included.

Additionally, the singular forms described herein may include plural meanings unless otherwise stated, and the same applies to the singular forms described in the claims.

In addition, expressions such as "first", "second", and the like used in the present specification are used to mutually distinguish multiple components, and do not limit the order or importance of the components.

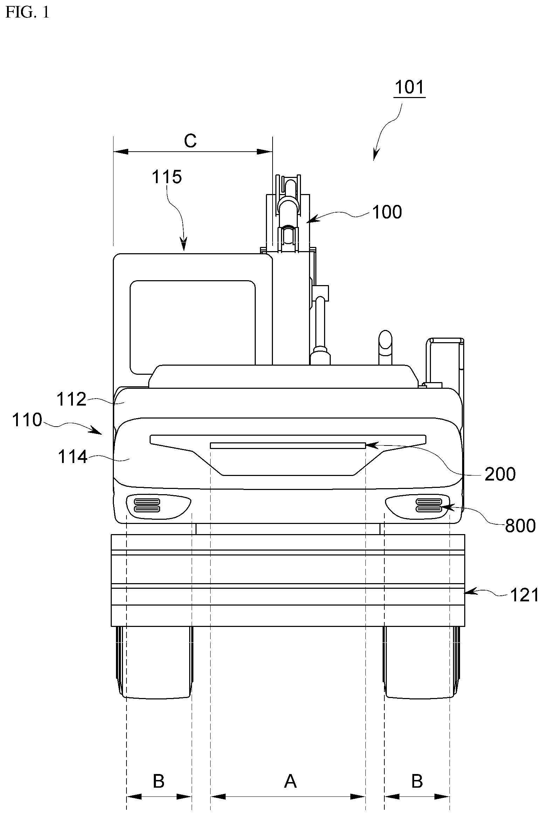

Hereinafter, a construction machine 101 according to one embodiment of the present disclosure will be described with reference to FIGS. 1 to 6.

For example, the construction machine 101 may be an excavator. Moreover, as illustrated in FIG. 1, the construction machine 101 may include a driving body 121 for driving, a swing body 110 rotatably installed on the upper portion of the driving body 121, and a work device 150 installed in front of the swing body 110.

The driving body 121 supports the swing body 110 and can drive the construction machine 101 through a driving device using power generated from an engine. In the first embodiment of the present disclosure, the driving body 121 can be a wheel type including a plurality of driving wheels. That is, the wheel type construction machine 101 can be driven on general roads as well.

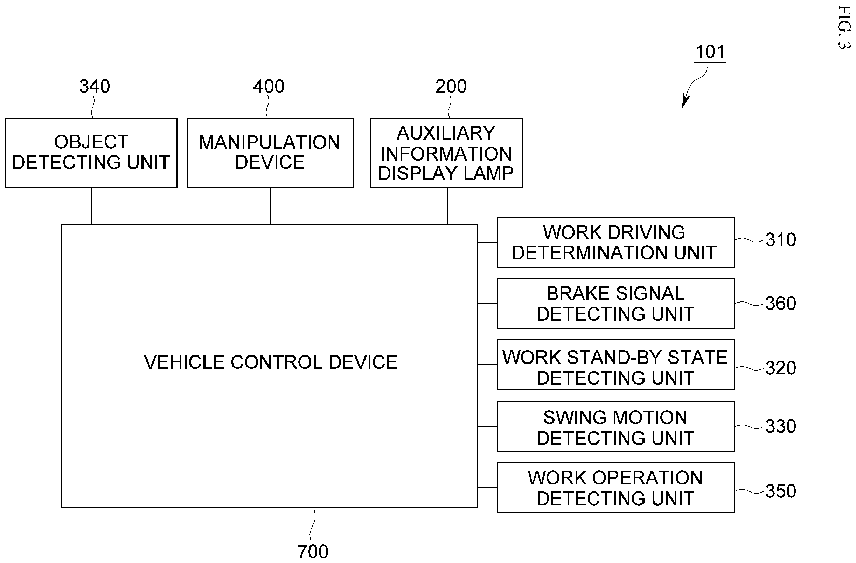

The swing body 110 can be rotated on the driving body 121 to set the working direction. In addition, the swing body 110 may be provided with a driver seat 115 having a manipulation device 400 (as illustrated in FIG. 3) installed therein. For example, the driver seat 115 may be disposed on one side of the front of the swing body 110. In addition, the swing body 110 may be provided with an engine that generates power and a hydraulic pump that supplies an operating fluid to various driving devices by the engine.

In addition, an engine room 112 may be disposed at the rear of the swing body 110, and an engine room cover 114 for protecting and opening/closing the engine room 112 may be installed at the rear of the engine room 112.

Moreover, the auxiliary information display lamp 200 to be described later may be disposed of in the engine room cover 114, and the brake lamp 800 to be described later may be disposed of in the swing body 110 other than the engine room cover 114. That is, the auxiliary information display lamp 200 and the brake lamp 800 may be disposed in separate parts.

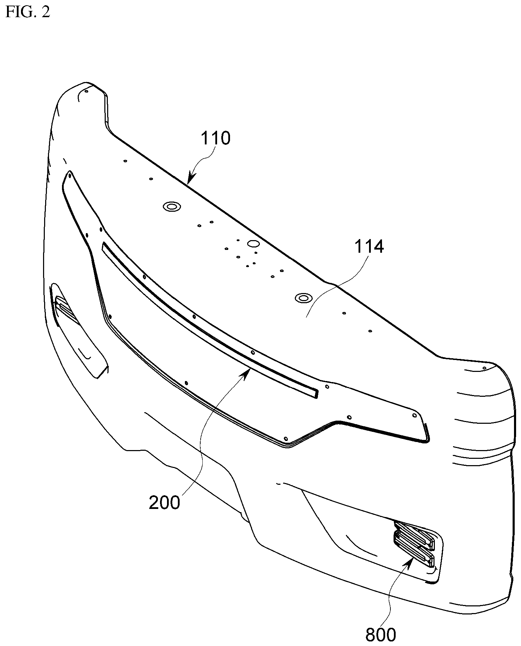

However, the first embodiment of the present disclosure is not limited to this, and as illustrated in FIG. 2, the auxiliary information display lamp 200 and the brake lamp 800 may be disposed together in the engine room cover 114.

The work device 150 may include a boom, an arm, a bucket, a boom cylinder for controlling the movement of the boom, an arm cylinder for controlling the movement of the arm, and a bucket cylinder for controlling the movement of the bucket. In addition, the construction machine 101 may be selectively equipped with a plurality of attachments, including a tilt rotator, a shovel, a breaker, a vibrator, a hammer, or the like, instead of a bucket as the work device 150, depending on the type of work. In addition, the work device 150 may further include an optional cylinder, or the like.

Additionally, as illustrated in FIG. 2, the brake lamp 800 and the auxiliary information display lamp 200 may be installed at the rear of the swing body 110.

As illustrated in FIG. 3, the construction machine 101 according to the first embodiment of the present disclosure may further include an object detecting unit 340, a swing motion detecting unit 330, and a control device 700 in addition to the brake lamp 800, the auxiliary information display lamp 200, and the manipulation device 400 mentioned above.

Additionally, the construction machine 101 may further include a work stand-by state detecting unit 320, a work operation detecting unit 350, a work driving determination unit 310, and a brake signal detecting unit 360.

The brake lamp 800 is installed at both ends at the rear of the swing body 110 and turned on according to the braking of the driving body 121.

The auxiliary information display lamp 200 may be installed horizontally and long above the brake lamp 800 at the rear of the swing body 110. Specifically, the auxiliary information display lamp 200 may include a plurality of light-emitting diodes (LEDs) that are installed long horizontally and can be turned on independently. Accordingly, in the first embodiment of the present disclosure, the auxiliary information display lamp 200 may be turned on or blinked in one pattern selected from a plurality of differently set patterns. Here, the plurality of patterns that the auxiliary information display lamp 200 may express will be described in detail later.

In addition, the auxiliary information display lamp 200 may be disposed so as not to overlap the brake lamp 800 vertically when viewed from the rear of the construction machine 101 and to overlap the driver seat 115 disposed on one side of the front of the swing body 110.

For example, in FIG. 1, a reference symbol A is a section where an auxiliary information display lamp is installed, a reference symbol B is a section where a brake lamp is installed, and a reference symbol C is a section where the driver seat is disposed. That is, A does not overlap B, and A may be disposed so as to overlap C in the vertical direction.

In this way, the auxiliary information display lamp 200 may be installed so that the auxiliary information display lamp is formed long to increase information transmission power while being clearly distinguished from the brake lamp 800 so that there is no confusion in information transmission.

The object detecting unit 340 may detect objects surrounding the construction machine 101. Here, the surroundings of the construction machine 101 may include the rear or side rear of the driving body 121. For example, the object detecting unit 340 may include at least one of an ultrasonic sensor or a motion recognition sensor, and may be disposed at the rear of the construction machine 101 to detect objects at the rear. Since the auxiliary information display lamp 200 has a large function of notifying external workers at the rear, it is important to detect objects at the rear.

The work stand-by state detecting unit 320 may detect the work stand-by state of the work device 150. For example, the work stand-by state detecting unit 320 may include at least one of a pressure sensor for detecting a pilot pressure for controlling the supply of the operating fluid to the work device 150, a manipulation signal detecting unit for detecting a manipulation signal for the manipulation device 400 to be described later to manipulate the work device 150, and a limit sensor or a motion detection sensor for physically detecting the operation of the work device 150.

Specifically, in the construction machine 101, the supply of operating fluid discharged by the hydraulic pump to various work devices 150 may be controlled by the pilot pressure formed according to the operation signal of the manipulation device 400. Therefore, by detecting the pilot pressure for controlling the supply of operating fluid to the work device 150, it is possible to detect whether the work device 150 is currently working or in the work stand-by state. In addition, it is also possible to detect whether the work device 150 is currently working or in the work stand-by state by detecting the operation signal of the manipulation device 400 or directly detecting the operation of the work device 150.

The swing motion detecting unit 330 may detect the rotation of the swing body 110. For example, the swing motion detecting unit 330 may include at least one of a manipulation signal detecting unit for detecting a manipulation signal for manipulating the swing motion of the swing body 110 by the manipulation device 400 described below, a pressure sensor for detecting pilot pressure for controlling the supply of operating fluid for the swing motion of the swing body 110, an angular displacement sensor for measuring the rotation angle of the swing body 110, a rotation sensor for detecting the rotation of the swing body 110, a non-contact motion detection sensor, and a limit sensor for physically detecting the motion of the swing body 110.

Specifically, in the construction machine 101, the supply of operating fluid discharged by the hydraulic pump to the swing motor may be controlled by the pilot pressure formed according to the operation signal of the manipulation device 400. Therefore, it is possible to detect whether the swing body 110 is currently in the swing operation by detecting the pilot pressure for controlling the supply of operating fluid to the swing motor. In addition, it is also possible to detect whether the swing body 110 is currently in the swing operation by detecting the swing operation signal of the manipulation device 400 or directly detecting the swing operation of the swing body 110.

The work operation detecting unit 350 may detect the current operation of the work device 150. For example, the work operation detecting unit 350 can include one or more of a pressure sensor for detecting a pilot pressure for controlling the supply of the operating fluid to the work device 150, a pressure sensor for detecting the pressure of the operating fluid supplied to the work device 150, a motion recognition sensor for detecting the operation of the work device 150, a displacement sensor, and a limit sensor.

Specifically, the work device 150 may include a hydraulic cylinder, and may detect a pilot pressure for controlling the supply of operating fluid discharged by a hydraulic pump to the hydraulic cylinder to detect what work the work device 150 is currently doing. In addition, the work device 150 may detect what work the work device is currently doing by detecting the pressure of the hydraulic cylinder or directly detecting the operation of the work device 150.

The work driving determination unit 310 may detect whether the current construction machine 101 is in driving mode or work mode. For example, the work driving determination unit 310 may determine whether the work or driving is in progress by a manipulation signal for manipulating the driving of the driving body 121 or the work of the work device 150 by a manipulation device 400 described below, or may determine whether the driving is in progress by a speed sensor 121 mounted on the driving body.

The brake signal detecting unit 360 may detect a brake signal. For example, the brake signal detecting unit 360 may include at least one of a pressure sensor for detecting a pilot pressure for controlling the supply of operating fluid to the brake device, a pressure sensor for detecting the pressure of operating fluid supplied to the brake device, a manipulation signal detecting unit for detecting the manipulation signal of the manipulation device 400 for controlling the brake device, a motion recognition sensor for detecting the operation of the brake device, a displacement sensor, and a limit sensor.

Specifically, the brake device may also operate with the operating fluid, and whether the brake device is operating by detecting the pilot pressure for controlling the supply of the operating fluid to the brake device may be determined. In addition, the pressure of operating fluid supplied to the brake device may be detected, or the manipulation signal of the manipulation device 400 for controlling the brake device may be detected, or the operation of the brake device can be directly detected.

The manipulation device 400 may manipulate the driving motion of the driving body 121, the swing operation of the swing body 110, the working motion of the work device 150, and input a brake signal for controlling the brake device. In addition, the manipulation device 400 may also control whether the auxiliary information display lamp 200 operates. That is, the function of the auxiliary information display lamp 200 may be activated or deactivated through the manipulation device 400.

In addition, in the first embodiment of the present disclosure, the manipulation device 400 may have a work mode selecting unit for selecting the use of the work device 150. The user may select a work mode and a driving mode through the work mode selecting unit. When the user selects the driving mode, the construction machine 101 can only drive, and when the user selects the work mode, the construction machine 101 can both drive and work. When the work mode is selected through the work mode selecting unit, the auxiliary information display lamp 200 may be turned on. Accordingly, information about whether the currently selected mode is the driving mode or the work mode may be notified to external workers through the auxiliary information display lamp 200. For example, when the brake lamp 800 is off and the auxiliary information display lamp 200 is on, external workers may know that the construction machine 101 is currently on standby in the work mode.

The control device 700 lights or blinks the auxiliary information display lamp 200 in one pattern selected from a plurality of differently set patterns based on information received from the object detecting unit 340 and the swing motion detecting unit 330, but controls the auxiliary information display lamp 200 to preferentially display lighting according to the brake signal.

Here, the plurality of patterns may include a pattern in which the auxiliary information display lamp 200 is sequentially turned on or blinked from one end to the other end when the swing body 110 is in the swing operation state, and a pattern in which the entire auxiliary information display lamp 200 is repeatedly blinked when an object is detected around the driving body 121. At this time, the control device 700 may display the swing operation state on the auxiliary information display lamp 200 with priority over the case in which an object is detected around the driving body 121. In addition, the pattern displayed by the auxiliary information display lamp 200 when the swing body 110 is in the swing operation state may be executed for a preset period of time before the swing body 110 starts to turn or after the turning is completed. For example, the preset period of time may be set within a range of 1 second to 10 seconds.

In addition, the control device 700 receives information from the work stand-by state detecting unit 320, the work operation detecting unit 350, the work driving determination unit 310, and the brake signal detecting unit 360 in addition to the object detecting unit 340 and the swing motion detecting unit 330, and based on the information, may turn on or blink the auxiliary information display lamp 200 in one pattern selected from among a plurality of differently set patterns.

For example, the plurality of patterns may include a first pattern, a second pattern, a third pattern, a fourth pattern, a fifth pattern, and a sixth pattern.

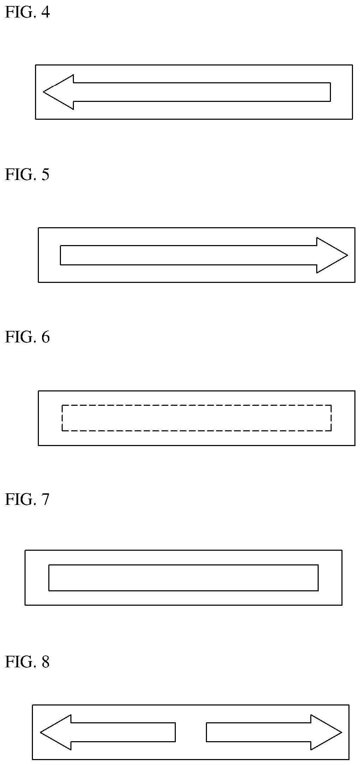

The first pattern may be implemented when the swing body 110 is in the right swing operation state. Specifically, as illustrated in FIG. 4, in the first pattern, the process of sequentially turning on or blinking the auxiliary information display lamp 200 from the right end to the left end may be repeated. In FIG. 4, the arrow indicates the direction in which the auxiliary information display lamp is sequentially turned on.

The second pattern may be implemented when the swing body 110 is in the left swing operation state. Specifically, as illustrated in FIG. 5, in the second pattern, the process of sequentially turning on or blinking the auxiliary information display lamp 200 from the left end to the right end may be repeated. In FIG. 5, the arrow indicates the direction in which the auxiliary information display lamp 200 is sequentially turned on.

The third pattern can be implemented when the work device 150 is in a working status. Specifically, as illustrated in FIG. 6, in the third pattern, the entire auxiliary information display lamp 200 may blink repeatedly. Specifically, as illustrated in FIG. 6, in the third pattern, the entire auxiliary information display lamp 200 may blink repeatedly. An inner square indicated by the dotted line in FIG. 6 represents a state in which the auxiliary information display lamp 200 is blinking repeatedly.

The fourth pattern may be implemented when the work device 150 is in the work stand-by state. In the fourth pattern, the entire auxiliary information display lamp 200 may be turned on simultaneously and then maintained in the turned-on state. An inner square indicated by a solid line in FIG. 7 represents a state in which the auxiliary information display lamp 200 is maintained in the turned-on state.

The fifth pattern may be implemented when a surrounding object is detected while the driving body 121 is moving backwards. Specifically, in the fifth pattern, the entire auxiliary information display lamp 200 may be blinked repeatedly with a relatively shorter cycle than in the fourth pattern. For example, in the fifth pattern, the auxiliary information display lamp is blinked repeatedly with a cycle less than half that of the third pattern.

The sixth pattern may be implemented when the brake signal is detected during driving of the driving body 121 or during work standby of the work device 150. Specifically, as illustrated in FIG. 8, in the sixth pattern, a process in which the auxiliary information display lamp 200 is sequentially turned on or blinked the center area toward both ends may be repeated. In FIG. 8, the arrows indicate the direction in which the auxiliary information display lamp 200 is sequentially turned on.

In addition, when two or more conditions are met simultaneously among the plurality of patterns, the control device 700 may display the sixth pattern with the highest priority on the auxiliary information display lamp 200, and display the first pattern and the second pattern with higher priority than the third pattern and the fifth pattern. In addition, since the fourth pattern indicates a work stand-by state, the fourth pattern is unlikely to overlap other patterns, but if the fourth pattern overlaps, a lower priority is given to the fourth pattern.

Meanwhile, when a brake signal is not detected while the construction machine 101 is driving in driving mode, the auxiliary information display lamp 200 may be turned off. That is, the auxiliary information display lamp 200 may be turned off.

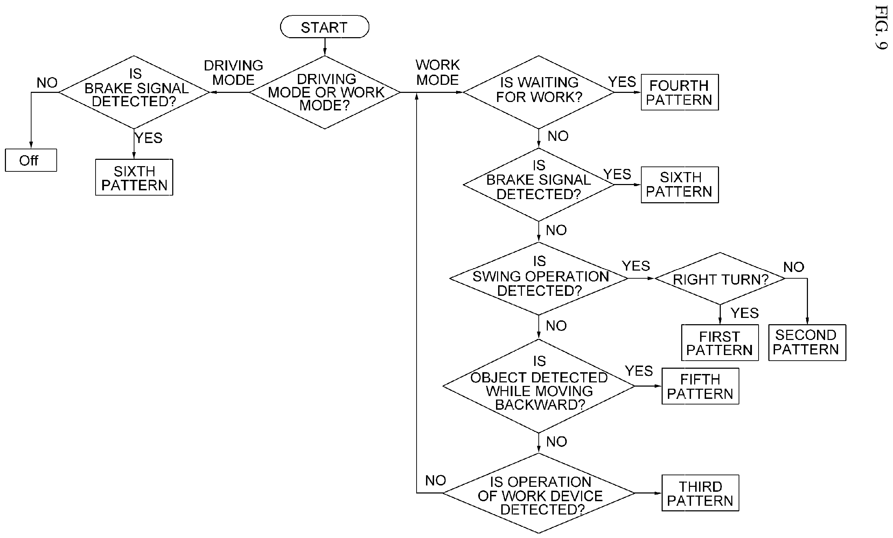

Hereinafter, a control method of a construction machine 101 according to a first embodiment of the present disclosure will be described with reference to FIG. 9. That is, a control and operation method of the auxiliary information display lamp 200 used in the construction machine 101 will be described as an example. In this case, the construction machine 101 may be a wheel type.

As illustrated in FIG. 9, when the construction machine 101 starts operating, it is determined whether the construction machine is currently in driving mode or work mode.

First, when it is determined to be a driving mode, the brake signal is detected, and when the brake signal is detected, the auxiliary information display lamp 200 displays the sixth pattern. Meanwhile, when a brake signal is not detected, the auxiliary information display lamp 200 is turned off.

In this way, when the construction machine 101 operates in driving mode, the auxiliary information display lamp 200 performs the function of an auxiliary brake light.

Next, when it is determined to be in work mode, it is determined whether the construction machine 101 is currently on standby for work.

When detected as waiting for work, the auxiliary information display lamp 200 displays the fourth pattern.

When not waiting for work, it preferentially detects whether the swing operation is in progress.

When the swing operation is in progress, the swing direction is detected, and when it is a right turn, the auxiliary information display lamp 200 displays the first pattern, and when it is a left turn, the auxiliary information display lamp 200 displays the second pattern.

When not in the swing operation, it is determined whether an object is detected while the current construction machine 101 is moving backwards. When an object is detected while moving backwards, the auxiliary information display lamp 200 displays the fifth pattern.

Finally, the operation of the work device 150, for example, a boom cylinder, an arm cylinder, a bucket cylinder, or an optional cylinder, is detected. When the operation of the work device 150 is detected, the auxiliary information display lamp 200 displays the third pattern.

Moreover, when the operation of the work device 150 is not detected, the process of determining whether work is waiting again is repeated.

That is, when the construction machine 101 operates in work mode, the auxiliary information display lamp 200 may display various patterns to inform workers working nearby of the type of work being performed by the construction machine 101 and warn them to draw their attention.

By this configuration, the construction machine 101 according to the first embodiment of the present disclosure can effectively warn by auxiliary displaying the current status to the surroundings through the multi-functional auxiliary information display lamp 200.

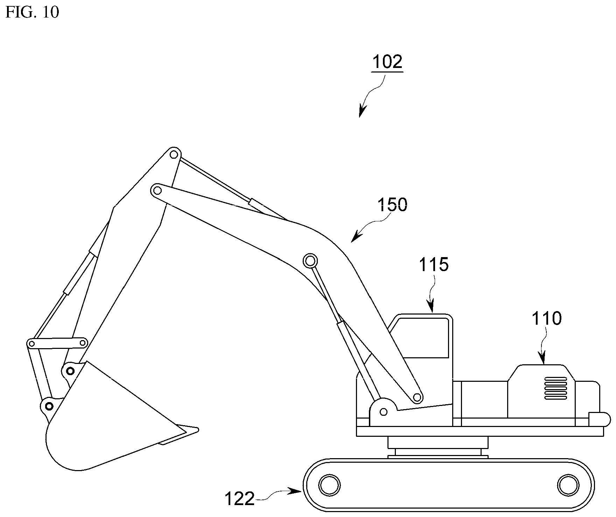

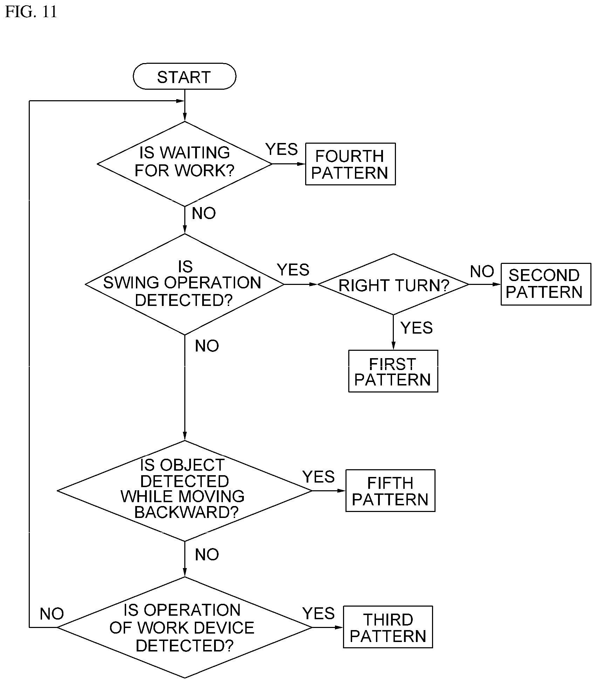

Hereinafter, a second embodiment of the present disclosure will be described with reference to FIGS. 10 and 11.

As illustrated in FIG. 10, a driving body 122 of a construction machine 102 may be of a crawler type. That is, the construction machine 102 may move during work due to the characteristics of the crawler type, but does not operate in a driving mode for road driving.

Accordingly, the construction machine 102 according to the first embodiment of the present disclosure may omit the work driving determination unit 310 and the brake signal detecting unit 360 included in the first embodiment described above.

In addition, the sixth pattern, which is implemented when the brake signal is detected during driving of the driving body 122 or during work standby of the work device 150 among the multiple patterns, may be omitted. That is, the auxiliary information display lamp 200 does not perform the function of the auxiliary brake light.

In addition, since the sixth pattern is omitted among the multiple patterns, the control device 700 may display the first pattern and the second pattern with priority on the auxiliary information display lamp 200.

As described above, the construction machine 102 according to the second embodiment of the present disclosure is identical to the first embodiment, except that the work driving determination unit 310 and the brake signal detecting unit 360 are omitted and the sixth pattern among the plurality of patterns is omitted.

Hereinafter, a control method of the construction machine 102 according to the second embodiment of the present disclosure will be described with reference to FIG. 11. That is, the control and operation method of an auxiliary information display lamp 200 used in a construction machine 102 will be described as an example. In this case, the construction machine 102 may be a crawler type.

As illustrated in FIG. 11, when the construction machine 102 starts operation, it is determined whether the construction machine 102 is currently on standby for work.

When detected as waiting for work, the auxiliary information display lamp 200 displays the fourth pattern.

When not waiting for work, it preferentially detects whether the swing operation is in progress.

When the swing operation is in progress, the swing direction is detected, and when it is a right turn, the auxiliary information display lamp 200 displays the first pattern, and when it is a left turn, the auxiliary information display lamp 200 displays the second pattern.

When not in the swing motion, it is determined whether an object is detected while the current construction machine 102 is moving backwards. When an object is detected while moving backwards, the auxiliary information display lamp 200 displays the fifth pattern.

Finally, the operation of the work device 150, for example, a boom cylinder, an arm cylinder, a bucket cylinder, or an optional cylinder, is detected. When the operation of the work device 150 is detected, the auxiliary information display lamp 200 displays the third pattern.

Moreover, when the operation of the work device 150 is not detected, the process of determining whether work is waiting again is repeated.

That is, the auxiliary information display lamp 200 may display various patterns to inform workers working nearby of the type of work being performed by the construction machine 101 and warn them to draw their attention.

By this configuration, the construction machine 102 according to the second embodiment of the present disclosure can also effectively warn by auxiliary displaying the current status to the surroundings through the multi-functional auxiliary information display lamp 200.

Although the embodiments of the present disclosure have been described with reference to the attached drawings, those skilled in the art will understand that the present disclosure can be implemented in other specific forms without changing the technical idea or essential features thereof.

Therefore, the embodiments described above should be understood as illustrative and not restrictive in all respects, and the scope of the present disclosure is indicated by the claims described below in the above detailed description, and all changes or modifications derived from the meaning and scope of the claims and their equivalent concepts should be interpreted as being included in the scope of the present disclosure.

### [DESCRIPTION OF REFERENCE NUMERAL

101, 102: construction machine
110: swing body
115: driver seat
121, 122: driving body
150: work device
200: auxiliary information display lamp
310: work driving determination unit
320: work stand-by state detecting unit
330: swing motion detecting unit
340: object detecting unit
350: work operation detecting unit
360: brake signal detecting unit
400: manipulation device
700: control device
800: brake lamp

### [INDUSTRIAL APPLICABILITY]

A construction machine according to an embodiment of the present disclosure can be used to effectively warn by auxiliary displaying the current status to the surroundings through a multi-functional auxiliary information display lamp.

## Claims

1. A construction machine including a driving body, a swing body rotatably installed on the driving body, and a work device installed in front of the swing body, the construction machine comprising:
a brake lamp which is installed at both ends at the rear of the swing body and turned on in response to braking of the driving body;
an auxiliary information display lamp installed long horizontally above the brake lamp at the rear of the swing body;
an object detecting unit which detects objects around the construction machine;
a swing motion detecting unit which detects the rotation of the swing body; and
a control device which turns on or makes the auxiliary information display lamp blink in a pattern selected from among a plurality of differently set patterns on the basis of information received from the object detecting unit and the swing motion detecting unit,
wherein the control device controls the auxiliary information display lamp to preferentially light up according to a brake signal.

2. The construction machine of claim 1, wherein the auxiliary information display lamp includes a plurality of light-emitting diodes (LEDs) that are installed long horizontally and turned on independently.

3. The construction machine of claim 1, further comprising a driver seat disposed on one side of the front of the swing body,
wherein the auxiliary information display lamp is disposed so as not to overlap the brake lamp vertically but to overlap the driver seat when viewed from the rear.

4. The construction machine of claim 1, further comprising:
an engine room that is disposed on the rear of the swing body; and
an engine room cover that protects and opens and closes the engine room,
wherein the auxiliary information display lamp is disposed in the engine room cover, and
the brake lamp is disposed in the swing body other than the engine room cover.

5. The construction machine of claim 1, further comprising a manipulation device having a work mode selecting unit for selecting the use of the work device,
wherein when a work mode is selected through the work mode selection unit, the auxiliary information display lamp is turned on.

6. The construction machine of claim 1, wherein the plurality of patterns include:
a pattern in which the auxiliary information display lamp sequentially is turned on or blinked from one end to the other end when the swing body is in a swing operation state, and
a pattern in which the entire auxiliary information display lamp is blinked repeatedly when an object is detected around the driving body.

7. The construction machine of claim 6, wherein the control device displays the swing operation state on the auxiliary information display lamp with priority over the case in which an object is detected around the driving body.

8. The construction machine of claim 6, wherein when the swing body is in the swing operation state, the pattern displayed by the auxiliary information display lamp is executed for a preset period of time before the swing body swings or after the swing of the swing body ends.

9. The construction machine of claim 1, further comprising a work stand-by state detecting unit for detecting a work stand-by state of the work device,
wherein the control device additionally reflects information received from the work stand-by state detecting unit when turning on or blinking the auxiliary information display lamp.

10. The construction machine of claim 1, wherein the object detecting unit includes an ultrasonic sensor or a motion recognition sensor, and the object detecting unit is arranged at the rear of the construction machine to detect an object at the rear.
